# DEMANDE DE BREVET EUROPEEN

(11) **EP 0 691 504 A1**
(43) Date de publication de la demande: **10.01.1996**
(21) Numéro de dépôt: 95870060.1
(22) Date de dépôt: 23.05.1995
(51) Int. Cl.: F16L 41/00

(54) **Utilisation de raccords pontés pour l'irrigation de structures tubulaires mono- et polydimensionelles**

(30) Priorité: 24.05.1994 BE 9400525
(71) Demandeur: Atelier D Société Cooperative, B-1300 Wavre (BE)
(72) Inventeur: De Laminne de Bex, José-Maria, c/o Atelier D s.c., B-1300 Wavre (BE)

(57) **Abrégé**

L'invention concerne un dispositif simple permettant d'assurer la circulation de liquide dans les charpentes polydimensionnelles architecturales, constituées de tubulures creuses et aveugles.

Ces dernières sont réunies par des raccords souples de pontage branchés sur des tètines soudées à chaque extrémité des élements constitutifs de la charpente..

La circulation de liquide obtenu par cette combinaison permet d'utiliser la charpente pour la protection incendie et pour la climatisation des locaux

Le parti maximum de l'invention est obtenu en asservissant les débits de liquide caloporteur à la demande de chaleur ou de froid des locaux sous-jacents à l'intervention d'un automate programmable.

Dans un exemple avantageux de l'invention, les éléments constitutifs de la charpente ont une forme originale associant tubes et profilés classiques soudés.

## Description

La présente invention a pour objet un dispositif simple permettant d'assurer la circulation de liquide dans les structures tubulaires mono ou polydimensionnelles utilisées conjointement ou en particulier pour la protection contre l'incendie et/ou la climatisation des locaux sous-jacents.
La protection contre les dégats du feu des structures métalliques tubulaires par remplissage d'eau est une technique bien connue. Une application particulière de cette technique permet d'assurer en outre la protection contre l'incendie des locaux sous-jacents par incorporation à la tubulure même d' orifice de pulvérisation à ouverturee automatique, et de climatiser ces locaux par circulation, dans les tubulures, d'un fluide thermostatisé par un système générateur de chaleur ou de froid (BREVET BELGE 903096).

Tous les systèmes imaginés au cours de ces dernières années pour mettre en pratique cette application particulière se sont heurtés au coût élevé du système de raccordement entre les éléments constitutifs de la charpente polydimensionnelle dans lesquels doit circuler, sous pression et avec un débit assuré, le fluide de pulvérisation et de climatisation.

Le dispositif retenu par la présente invention répond à cet argument.

Il comporte:
- des raccords souples de pontage reliant entre eux les éléments creux et aveugles constitutifs de la charpente, indépendants des noeuds reliants mécaniquement ces éléments.
- Un système de distribution de fluide étudié en équidébit dans ces éléments, permettant d'assurer une distribution homogène dans l'ensemble de la charpente considérée.

Selon une forme de réalisation avantageuse de l'invention, le débit de fluide est conditionné automatiquement par les demandes climatiques des locaux sous-jacents à l'intervention d'un automate programmable, tandis que la pression générale du système est assurée par un groupe de surpression suivant un procédé connu en soi.

Le dispositif présenté dans l'invention permet donc
- d'assurer la protection contre l'incendie de la charpente et des locaux sous-jacents.
- de maîtriser, au moins partiellement, les besoins de climatisation des dits locaux.

La description suivante et le schéma annexé présente, à titre d'exemple, une forme d'exécution selon l'invention dans le cas d'une structure tridimensionnelle à noeuds sphériques creux.

Chaque élément tubulaire 1, creux et aveugle, est muni, à proximité de ses extrémités d'une tètine 2 soudée de diamètre approprié au débit à assurer au travers de cet élément. Ces tètines sont reliées entre elles et, éventuellement, au raccord sphérique 3, creux et aveugle, par des tuyaureries souples 4 interconnectées elles mêmes par des connections en té 5 ou croisillons 6 de telle façon que les pressions dynamiques et les débits qui en résultent dans chaque élement soient équivalents.

Selon une forme d'application particulièrement avantageuse de l'invention, la structure tubulaire mono-dimensionnelle est constituée par la soudure longitudinale d'un tube métallique sur la jambe d'un profilé en L ou T, tel qu'esquissé au schéma annexé. Cette forme originale conjuge les avantages de la structure tubulaire irriguée avec ceux des montages architecturaux classiques.

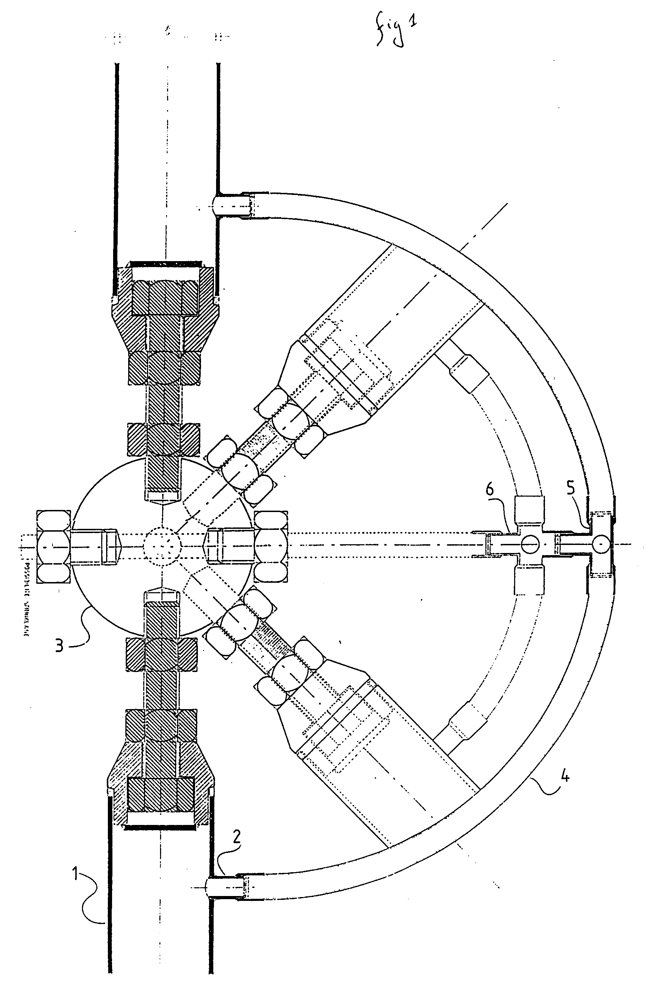

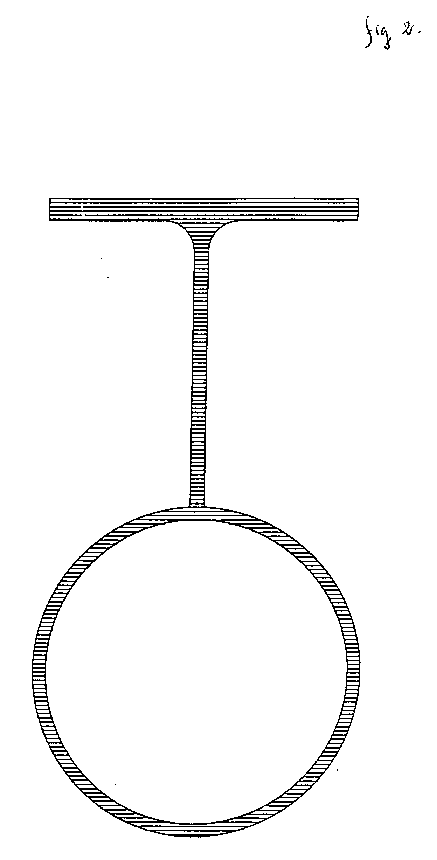

## Revendications

1. Dispositif pour relier entre eux les éléments tubulaires creux et aveugles de charpente mono- ou polydimensionnelle irriguée.

2. Installation similaire, dans laquelle les élements tubulaires irrigués, maintenus sous pression, sont garnis d'orifices de pulvérisation

3. Installation selon la revendication 2, dans laquelle la circulation de fluide est répartie uniformément dans la charpente en passant par les dispositifs selon la revendication 1.

4. Installation selon les revendications 1 à 3, dans laquelle la circulation de fluide est destiné à assurer la climatisation, totale ou partielle, des locaux sous-jacents.

5. Installation selon les revendications 1 à 4, dans laquelle un automate programmable maîtrise la circulation du fluide caloporteur en fonction de la demande climatique des dits locaux.

6. Installation selon une quelconque des revendications 1 à 5, dans laquelle la structure en cause est mono-dimensionnelle et constituée par un assemblage soudé d'un tube creux et aveugle irrigé et d'un profilé en L ou T suivant schéma annexé.
